# EUROPEAN PATENT APPLICATION

(11) **EP 4 491 031 A1**
(43) Date of publication of application: **15.01.2025**
(21) Application number: 23185678.2
(22) Date of filing: 14.07.2023
(51) Int. Cl.: A23J 3/00, A23J 3/14, A23J 3/22, A23L 29/00, A23L 29/20, A23L 33/10

(54) **A SHAPED LIPID FOOD COMPOSITION**

(71) Applicant: Unilever IP Holdings B.V., 3013 AL Rotterdam (NL)
(72) Inventor: Flendrig, Leonardus Marcus, 6708 WH Wageningen (NL); Nomena, Mamisoa, 6708 WH Wageningen (NL); Macias Rodriguez, Braulio Andres, 6708 WH Wageningen (NL); Velikov, Krassimir Petkov, 6708 WH Wageningen (NL); Voudouris, Panayiotis, 6708 WH Wageningen (NL)
(74) Representative: Tjon, Hon Kong Guno

(57) **Abstract**

The invention relates to a shaped lipid food composition comprising a combination of non-animal triglycerides, cellulose microfibrils, water and at least one of thermally gelling non-animal protein and/or non-protein emulsifier. The invention also provides a method for preparing the shaped lipid food composition and relates to a food product comprising the shaped lipid food composition.

## Description

### FIELD OF THE INVENTION

The invention relates to a shaped lipid food composition comprising a combination of non-animal triglycerides, cellulose microfibrils, water and at least one of thermally gelling non-animal protein and/or non-protein emulsifier. The shaped lipid food composition of the present invention has a very desirable texture, appearance and satisfactory frying properties.

The invention also provides a method for preparing the aforementioned shaped lipid food composition, said method comprising a high-shear treatment step. Further, the invention encompasses a food product comprising the aforementioned shaped lipid food composition.

### BACKGROUND OF THE INVENTION

Meat is considered the highest quality protein source, not only due to its nutritional characteristics, but also for its appreciated taste. Meat also contains fat tissue, greatly contributing to food acceptability by imparting specific characteristics such as appearance, texture, and mouthfeel. The fat tissue also contributes to the properties of the meat when it is prepared and cooked.

Due to concerns about climate change, a global shortage of animal protein and economic reasons, there is an increased interest in the consumption of non-meat proteins by consuming meat analogues instead of actual meat products.

Meat analogues are prepared to resemble meat as much as possible in appearance, taste and texture. Meat analogues are typically prepared from texturized vegetable protein. Texturized vegetable protein, are characterised by having an identifiable structure and structural integrity, such that each unit will withstand hydration, cooking and other procedures used in preparing the texturized vegetable protein for consumption. Beside texturized vegetable protein meat analogues typically comprise one or more of binding agents, animal fat tissue analogues, fats, flavouring, insoluble dietary fibres (e.g. cellulose) and additional protein.

Several approaches have been used in the prior art to create (plant-based) animal fat tissue analogues. Animal fat tissue is a complex structure with closely packed fat/lipid particles which are embedded in a fibrillar protein network. This protein network provides additional firmness and elasticity. This makes it a challenge to mimic textural properties of animal fat tissue when using plant-based fats.

Semisolid colloidal systems like oleogels incorporate a high percent of liquid oil within a structured network (composed by structurants) to give solid-like properties. However, an limitation is the available food-approved structurants suitable for gelling liquid oils; of which hydrocolloids appear to be the most promising candidate. Generally, the gelling concentrations of hydrocolloids are remarkably low because of their large molecular sizes, making them efficient structuring agents. Still, most food-approved polymers are fundamentally hydrophilic and cannot be dispersed easily in oil to achieve the necessary structure and network formation required for gelation.

The use of cellulose for structuring an oil phase has been described in WO2017067901A1. This publication describes a composition comprising an oil phase and a fibrous preparation of delaminated cell wall material dispersed in said oil phase, wherein the cell wall material is sourced from plant tissue, and wherein said fibrous preparation has a specific surface area corresponding to an S_{BET} of at least 5 m²/g. This specific surface area is obtained by drying (typically supercritical or freeze-drying) of an aqueous dispersion of the delaminated cell wall material such that the openness of the delaminated cell wall material is maintained. Without this openness in air the delaminated cell wall material is not suited for structuring lipid.

### SUMMARY OF THE INVENTION

A first aspect of the invention relates to a shaped lipid food composition with an elastic compression modulus larger than 9 kPa and comprising by weight of the lipid food composition:
a. 15-99 wt.% of non-animal triglycerides;
b. 0.1-6 wt.% of cellulose microfibrils;
c. 0-15 wt.% of thermally gelling non-animal protein;
d. 0-5 wt.% of non-protein emulsifier; and
e. 0.1-75 wt.% water;
wherein the lipid food composition comprises at least one of component (c), (d) or both; and wherein the lipid food composition has a composition homogeneity parameter (CHP) of at least 0.06.

The shaped lipid food compositions of the present invention may be used as an animal fat tissue analogue, for example as an ingredient in a meat analogue. The shaped lipid food composition resembles animal fat tissue very closely in appearance (e.g. opaque colour), structure (integrity, elasticity) and frying behaviour (thermal stability, shape retention and browning).

Alternatively, shaped lipid food compositions of the present invention may be used in food products such as soups, pasta, noodles, spreads, meal makers, souses, dressings, savoury concentrates, snacks, beverages, and frozen desserts. In these products the shaped compositions provide a source of texture and tastiness. It is also a convenient way to provide liquid oil in powdered products.

Although the inventors do not wish to be bound by theory, it is believed that the ultra-fine distribution of cellulose microfibrils within the shaped lipid food composition leads to the previously described benefits. The distribution levels are reflected in the composition homogeneity parameter (CHP), the method of determination is described below.

A second aspect of the invention relates to a method for preparing the aforementioned shaped lipid food composition, comprising the steps of:
a. producing an aqueous dispersion comprising cellulose microfibrils by treating an aqueous dispersion comprising a source of cellulose microfibrils with high shear;
b. producing an emulsion by combining the aqueous dispersion comprising microfibrils with non-animal triglycerides and at least one of (i) thermally-gelling non-animal protein and (ii) non-protein emulsifier; and
c. cooling the emulsion to produce the shaped lipid food composition.

Further, a third aspect of the invention relates to a food product comprising 1-80 wt.% of the aforementioned shaped lipid food composition.

### DETAILED DESCRIPTION OF THE INVENTION

The terms "a" and "an" and "the" and similar referents as used herein refer to both the singular and the plural, unless otherwise indicated herein or clearly contradicted by context.

Throughout this specification and the claims which follow, unless the context requires otherwise, the word "comprise" and variations such as "comprises" or "comprising" will be understood to imply the inclusion of a stated integer or step or group of integers or steps but not the exclusion of any other integer or step or group of integers or steps.

Numerical ranges expressed in the format "from x to y" are understood to include x and y.

Whenever components A and B are said to be present in a weight ratio of x:y, what is meant is that the concentration of component A in wt.% divided by the concentration of component B in wt.% equals x:y.

Concentrations expressed by weight of dry matter, as mentioned herein, refer to the amount of dry ingredient present in a composition as a percentage of the total amount of dry matter contained in the same composition.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The term "meat analogue", as used herein, refers to an edible product that does not contain animal meat but is designed to have the flavour, appearance, and mouthfeel of animal meat. Examples include burgers, sausages, nuggets, schnitzels etc. If the meat analogue is coated, such as a nugget or schnitzel, the term "meat analogue" is understood to refer to the whole composition, including any potential coating.

The term" vegetarian", as used herein, in relation to a product or an ingredient, refers to a product or an ingredient that does not contain animal meat or ingredients that have been derived from animal meat.

The term" vegan", as used herein, in relation to a product or an ingredient, refers to a product or an ingredient that has not been derived from animals. Meat, eggs and dairy products are examples of products that are not vegan.

The term "non-animal protein", as used herein, refers to protein from a non-animal source like a plant protein, a fungal protein, a microbial protein, or an algae protein. It excludes protein from mammals, fish, crustaceans, and birds.

The term "texturised non-animal protein" as used herein refers to lipid material that is produced by cooking an aqueous mixture of water, protein concentrate (optionally protein isolates) and optionally other ingredients in an extruder cooker and extruding the mixture. The extruded material is hydrated and can be used as hydrated non-animal protein without further hydration. After extrusion, the texturised non-animal protein may also be ground or cut into pieces and subsequently dried.

The term "polysaccharide" as used herein refers to all edible polysaccharides excluding cellulose microfibrils.

The term "fat", as used herein, refers to glycerides selected from triglycerides, diglycerides, monoglycerides, phosphoglycerides and combinations thereof. The term "fat" encompasses fats that are liquid at 20 °C and fats that are solid or semi-solid at 20 °C. The melting point of a fat can be determined according to ISO 6321 (2021).

A first aspect of the invention relates to shaped lipid food composition with an elastic compression modulus larger than 9 kPa and comprising by weight of the lipid food composition:
a. 15-99 wt.% of non-animal triglycerides;
b. 0.1-6 wt.% of cellulose microfibrils;
c. 0-15 wt.% of thermally gelling non-animal protein;
d. 0-5 wt.% of non-protein emulsifier; and
e. 0.1-75 wt.% water;
wherein the lipid food composition comprises at least one of component (c), (d) or both; and wherein the lipid food composition has a composition homogeneity parameter (CHP) of at least 0.06.

Preferably the shaped lipid food composition is a fat tissue analogue.

Preferably the shaped lipid food composition is a vegetarian shaped lipid food composition, more preferably the shaped lipid composition is a vegan shaped lipid food composition.

Preferably, the CHP of the shaped lipid food composition is 0.07-0.25, more preferably the CHP of the lipid composition is 0.08-0.2.

Preferably, the elastic compression modulus of the shaped lipid food composition is larger than 40 kPa, more preferably the elastic compression modulus is between 60-1000 kPa.

Preferably, the cellulose microfibrils and non-animal triglycerides are present in the shaped lipid food composition in a weight ratio of 1:500 - 1:5, more preferably 1:300 - 1:10.

Preferably, the weight ratio non-animal triglycerides to water in the shaped lipid food composition is at least 1:4, preferably 1:2-20:1, more preferably 1:1-15:1.

Preferably, the shaped lipid food composition comprises 30-96 wt.% of non-animal triglycerides, more preferably 45-93 wt.% and most preferably 60-90 wt.%.

Preferably, the non-animal triglycerides are one or more of canola oil, soybean oil, safflower oil, sunflower oil, sesame, oil, walnut oil, olive oil, flaxseed oil, chia seed oil, almond oil, corn oil, grape seed oil, peanut oil, coconut oil, palm oil, cotton seed oil, palm kernel oil, shea oil, and combinations thereof. More preferably the non-animal triglycerides are selected from sunflower oil, soybean oil, olive oil, coconut oil, palm oil, palm kernel oil and shea oil and combinations thereof.

Preferably, the non-animal triglycerides in the shaped lipid food composition have a N₂₀-value of 0-50%, more preferably 1-40%, even more preferably 2-30% and most preferably N₂₀-value of 4-20%. The N-value of the fat can suitably be determined by ISO method 8292-2:2008: Animal and vegetable fats and oils - Determination of solid fat content by pulsed NMR - Part 2: Indirect method.

Preferably, the non-animal triglycerides comprise non-animal liquid oil, non-animal hardstock fat and combinations thereof. More preferably, the non-animal liquid oil and non-animal hardstock fat are present in a weight ratio between 20:1-1:10, even more preferably 15:1-1:5, and most preferably 10:1-1:2.5.

Examples of non-animal liquid oil are canola oil, soybean oil, safflower oil, sunflower oil, sesame, oil, walnut oil, olive oil, flaxseed oil, chia seed oil, almond oil, corn oil, grape seed oil, and peanut oil. Preferred non-animal liquid oil are soybean oil, sunflower oil, olive oil and combinations thereof.

Examples of non-animal hardstock fat are coconut oil, palm oil, cotton seed oil, palm kernel oil, and shea oil. Preferred non-animal hardstock fat are coconut oil, palm oil, palm kernel oil and shea oil and combinations thereof.

The term 'cellulose microfibrils" is a term known in the art (e.g. Chinga-Carrasco, Nanoscale Research Letters, 2011, 6:417), and are different from cellulose fibers, such as for example present in wood, which consist of linear assemblies of cellulose microfibrils and have diameter of several micrometers. The cellulose microfibrils are insoluble in water. Cellulose microfibrils are preferably not chemically modified. The cellulose microfibrils are preferably not oxidized.

As known in the art, cellulose microfibrils may be suitably obtained from cell wall material by removing soluble and unbound sugars, protein, oils, waxes and phytochemicals (e.g. carotenoids, lycopene). This is suitably achieved using well known techniques including cutting up the cell wall material, cooking, washing, centrifugation, decanting and drying as is well-known to the skilled person.

The cellulose microfibrils are typically present in the composition in the form of single fibrils or as aggregates with a cross section of a few tens of nanometres to a few micrometres. Cellulose microfibrils are preferably present in aggregates with a cross section of from 3 to 100 nanometer, preferably of from 3 to 50 nanometers.

In a preferred embodiment, the cellulose microfibrils are provided by sources of parenchymal plant tissue (e.g. insoluble dietary fibres, fruit or vegetables), bacteria, algae and combinations thereof. More preferably, the cellulose microfibrils are provided by sources of parenchymal plant tissue. Most preferably, the cellulose microfibrils are provided by sources of parenchymal tissue selected from fruits, roots, bulbs, tubers, seeds, leaves and combinations thereof. Preferred sources of parenchymal tissue include citrus fruit, tomato, peach, pumpkin, kiwi, apple, mango, sugar beet, beetroot, turnip, parsnip, maise, oat, wheat, peas, and combinations thereof. Most preferably, the cellulose microfibrils are provided by sources of citrus fruit, tomato, apple, sugar beet or combination thereof.

Preferably, the sources of cellulose microfibrils are purees, pastes or powders.

Preferably, the shaped lipid food composition comprises 0.2-5 wt.% cellulose microfibrils, more preferably 0.4-4 wt.%, most preferably 0.6-3 wt.% cellulose microfibrils.

Preferably, the cellulose microfibrils are hydrated cellulose microfibrils.

Cellulose microfibrils have a crystalline structure, the degree of which greatly affects properties such as mechanical strength and water-binding capacity. In particular, the inventors found that an increased water-binding capacity provides the shaped lipid food composition with a higher degree of juiciness. The water-binding capacity decreases with an increased degree of crystallinity due to a more tightly packed structure, whereas a lower degree of crystallinity allows for a higher water-binding capacity due to the more open structure. It is therefore preferred that the cellulose microfibrils have an average degree of crystallinity of less than 50%, more preferably less than 35%, most preferably less than 30%. The table below shows the average degree of crystallinity of typical sources of cellulose microfibrils.

| **Source** | **Average degree of crystallinity (%)** |
|---|---|
| Tomato fibres | 32 |
| Citrus fibre (Citrus fibre AQ+N) | 29 |
| Bacterial cellulose (Nata de Coco) | 74 |
| Cotton | 72 |
| Wood pulp fibre (Meadwestvaco) | 61 |
| Sugar beet fibre (Nordix Fibrex) | 21 |
| Pea fibres (PF200vitacel) | 42 |
| Oat fibres (780 Sunopta) | 43 |
| Corn hull (Z-trim) | 48 |
| Sugar cane fibre (Ultracel) | 49 |

Preferably, the shaped lipid food composition comprises 0.1-12 wt.% of thermally gelling non-animal protein, more preferably 0.2-10 wt.%, most preferably 0.4-8 wt.% of thermally gelling non-animal protein.

The term "thermally gelling non-animal protein", as used herein, refers to a type of protein that can undergo a gelation process when subjected to heat at the concentration, pH and salt level used in the shaped lipid food composition. In the case of thermal gelation, a gel network is formed by the proteins upon heating, which is retained upon cooling.

Preferably, gelation occurs at a temperature of at least 40 °C, more preferably of at least 45 °C, even more preferably of at least 50 °C, still more preferably of at least 60 °C, yet more preferably of at least 70 °C, most preferably of at least 80 °C. Preferably gelation occurs at a temperature of not more than 100 °C.

In a preferred embodiment, the thermally gelling non-animal protein is not yet gelled in the shaped lipid food composition. This may be advantageous if the shaped lipid food composition is exposed to heat during cooking, the thermally gelling non-animal protein will undergo the gelation process and the lipid food composition will become more firm and elastic, which corresponds to the behaviour of animal fat tissue.

Preferably, the thermally gelling non-animal protein is selected from plant protein, fungal protein, microbial protein or combinations thereof. Examples of thermally gelling non-animal protein include legume protein isolates like soy protein isolate, pea protein isolate, mung bean protein isolate, oilseed proteins such as sunflower protein and rapeseed protein, and other plant proteins like potato protein, RuBisCo, mung 8S globulin, pea globulin, pea albumin, lentil protein, zein, oleosin and combinations thereof. Another example of a thermally gelling non-animal protein is a gel-forming Chlorella protein.

In a preferred embodiment, the thermally gelling non-animal protein is a thermally gelling plant protein, more preferably the thermally gelling plant protein is one or more of legume protein, oil seed protein, and potato protein.

Preferably, the shaped lipid food composition comprises 0.05-4 wt.% of non-protein emulsifier, more preferably 0.1-3 wt.%, most preferably 0.4-2 wt.% of non-protein emulsifier.

Preferably, the non-protein emulsifier is selected from lecithin, polysorbate emulsifiers, sugar esters of fatty acids and combinations thereof. More preferably, the non-protein emulsifier is selected from lecithin, polysorbate emulsifiers and combinations thereof. Most preferably the non-protein emulsifier is a polysorbate emulsifier, e.g. Tween-20.

Preferably, the shaped lipid food composition comprises 0.1-20 wt.% of polysaccharide, more preferably 0.5-15 wt.% of polysaccharide, most preferably 1-10 wt.% of polysaccharide.

The polysaccharide is preferably selected from the group consisting of carob bean gum, tara gum, cassia gum, chitosan, gum arabic, konjac mannan gum, carrageenan, methylcellulose, xanthan gum, pectin, starch, and combinations thereof.

The water content of the shaped lipid food composition preferably is 0.5-60 wt.%, more preferably 1-45 wt.%, and most preferably 2-30 wt.%.

Preferably, the sum of non-animal triglycerides, cellulose microfibrils, thermally gelling non-animal protein, non-protein emulsifier and water together constitute at least 60 wt.% of the shaped lipid food composition, more preferably at least 65 wt.%, most preferably 70-100 wt.% of the composition.

In a preferred embodiment, the shaped lipid food composition comprises a high liquid oil content and comprises by weight of the lipid food composition:
a. 15-99 wt.% of non-animal triglycerides having a N₂₀-value <10%;
b. 0.1-6 wt.% of cellulose microfibrils;
c. 5-15 wt.% of thermally gelling non-animal protein;
d. 0-5 wt.% of non-protein emulsifier;
e. 0.1-75 wt.% water.

In this embodiment, the composition is structured by the combination of cellulose microfibrils and the at least partially gelled thermally gelling non-animal protein.

In an alternative embodiment, the shaped lipid food composition comprises hardstock fat and comprises by weight of the lipid food composition:
a. 15-99 wt.% of non-animal triglycerides having a N₂₀-value ≥10%;
b. 0.1-6 wt.% of cellulose microfibrils;
c. 0-15 wt.% of thermally gelling non-animal protein;
d. 0.1-5 wt.% of non-protein emulsifier;
e. 0.1-75 wt.% water.

In this embodiment, the composition is at least structured by the combination of cellulose microfibrils, non-protein emulsifier and the hardstock fat in the non-animal triglycerides.

A second aspect of the invention relates to a method for preparing the shaped lipid food composition as described herein before, comprising the steps of:
a. producing an aqueous dispersion comprising cellulose microfibrils by treating an aqueous dispersion comprising a source of cellulose microfibrils with high shear;
b. producing an emulsion by combining the aqueous dispersion comprising microfibrils with non-animal triglycerides and at least one of (i) thermally-gelling non-animal protein and (ii) non-protein emulsifier; and
c. cooling the emulsion to produce the shaped lipid food composition.

Preferably, the embodiments described herein above with regard to the shaped lipid food composition equally apply to the method of preparing the shaped lipid food composition.

Preferably, the aqueous dispersion comprises 0.2-12 wt.% of a source of cellulose microfibrils, more preferably 0.4-10 wt.%, most preferably 0.6-8 wt.% of a source of cellulose microfibrils.

The aqueous dispersion comprising a source of cellulose microfibrils undergoes a high-shear treatment to produce an ultra-fine dispersion of cellulose microfibrils. The CHP of the produced dispersion comprising cellulose microfibrils is at least 0.06, preferably 0.07-0.25 and more preferably 0.08-0.2.

In a preferred embodiment, the produced emulsion in step b. comprises thermally-gelling non-animal protein and non-animal triglycerides having a N₂₀-valuebelow 10%, and the produced emulsion in step b. is heated before step c. to gel said thermally-gelling non-animal protein at least partially. More preferably, this heating is performed at a temperature between 50-150 °C, most preferably between 60-100 °C.

In another preferred embodiment, the produced emulsion in step b. comprises non-protein emulsifier and non-animal triglycerides having a N₂₀-value of at least 10%, and the non-animal triglycerides are heated to a temperature above the melting point of the non-animal triglycerides before and during step b.

In yet another preferred embodiment, the produced emulsion in step b. comprises thermally gelling non-animal protein, non-protein emulsifier and non-animal triglycerides having a N₂₀-value of at least 10%, and the non-animal triglycerides are heated before and during step b. to a temperature which is:
(i) above the melting point of the non-animal triglycerides; and
(ii) below the gelation temperature of the thermally gelling non-animal protein.

In the method, the thermally gelling non-animal protein is preferably added at least partially to the aqueous dispersion before the high-shear treatment.

Preferably, the produced emulsion of step b. is dried before step c. to produce an emulsion with a water content of at most 15 wt.% by weight of the emulsion. More preferably, to produce an emulsion with a water content of at most 10 wt.% by weight of the emulsion, most preferably to produce an emulsion with a water content of at most 5 wt.% by weight of the emulsion. The lower the water content, the more the shaped lipid food composition resembles real animal tissue.

Preferably, the drying is performed by vacuum drying or freeze drying.

In a preferred embodiment, step a. and b. are performed simultaneously. In this preferred embodiment, the aqueous dispersion comprising a source of cellulose microfibrils, non-animal triglycerides and at least one of (i) thermally-gelling non-animal protein and (ii) non-protein emulsifier are combined to produce a mixture and by treating this mixture with high shear an emulsion is produced comprising an aqueous dispersion comprising microfibrils, non-animal triglycerides and at least one of (i) thermally-gelling non-animal protein and (ii) non-protein emulsifier.

Preferably, the high shear treatment includes one or more steps of high-pressure homogenisation at a pressure between 200-4000 bar. More preferably, the high-shear treatment includes one or more steps of high-pressure homogenisation at a pressure between 300-3000 bar, more preferably between 400-2000 bar, most preferably between 500-1500 bar.

In a preferred embodiment, the high-pressure homogenisation is microfluidization and includes one or more steps of microfluidization at a pressure between 300-4000 bar, more preferably between 500-3000 bar, most preferably between 700-2000 bar.

In an alternative preferred embodiment, other physical methods known in the art for defibrillation or/and dispersing of cellulose such as sonication, milling, grinding, steam explosion, refining, or combinations of these can also be used to produce an aqueous dispersion comprising cellulose microfibrils (e.g. Osong, S.H., Norgren, S. & Engstrand, P. Processing of wood-based microfibrillated cellulose and nanofibrillated cellulose, and applications relating to papermaking: a review. Cellulose 23, 93-123 (2016). https://doi.org/10.1007/s10570-015-0798-5).

The produced shaped lipid food composition in step iii. is preferably shaped into the shape of a fat tissue analogue.

A third aspect of the present invention relates to a food product comprising 1-80 wt.% of the shaped lipid food composition as described herein before.

Preferably the food product comprises 2-60 wt.% of the shaped lipid food composition, more preferably 3-40 wt.% and most preferably 4-20 wt.% of the shaped lipid food composition.

Preferably the food product selected from the group of meat analogues, soups, pasta, noodles, spreads, meal makers, souses, dressings, savoury concentrates, snacks, beverages, and frozen desserts.

In a particularly preferred embodiment, the food product is a meat analogue further comprising by weight of the meat analogue one or more of:
- 0-75 wt.% of hydrated texturized non-animal protein pieces; and
- 0-70 wt.% of a binder.

More preferably, the meat analogue comprises by weight of the meat analogue:
- 2-60 wt.% of the shaped lipid food composition;
- 20-65 wt.% of hydrated texturized non-animal protein pieces; and
- 5-50 wt.% of a binder.

Examples of optional further ingredients in the meat analogue include non-animal fat, emulsifiers, acidulants, preservatives, colouring, flavouring, vitamins and minerals.

The meat analogue is preferably a vegetarian meat analogue, more preferably the meat analogue is a vegan meat analogue.

The meat analogue may be preferably provided in different shapes, such as patties, balls, chunks, minced meat and sausages.

The meat analogue with the shaped lipid food composition is particularly suited for mimicking meat with high saturated fat content, such as bacon, lardon, of for mimicking meat with visible fat pieces, such as cured meats (e.g. salami, chorizo).

The following non-limiting examples further illustrate the invention.

### EXAM PLES

### Measurement methods

### Linear elastic compression modulus (Young's modulus) - used in Example 1

Samples for analysis of the lipid food compositions are prepared by piercing through with a cylindrical metallic rod (10 mm inner diameter) and cut with a flurocarbone wire cutter (0.30 mm diameter) to obtain pieces with an aspect ratio diameter/height of 1 (diameter: 10 mm, height:10 mm). Lipid food compositions were analysed using the TA.XTplus Texture Analyser (Stable Micro Systems, UK) using flat cylindrical probes with a diameter of either 6cm or 1.27cm and compressed to a strain of 50% or 80% using a trigger force of 2-10 g and test speed of 1-5 mm/sec. The force F during compression and strain ε were measured automatically once the trigger force is achieved. The deformed surface area A and stress σ were determined based on contact area set by the diameter of the gel or the probe according to A = πd²/4 and σ = F/A. Force-displacement curves were converted into stress-strain curves.

Stress-strain curves were analysed to determine the linear young's modulus E = σ/ε. The data for strain ε (x-axis) and stress σ (y-axis) were plotted in a suitable programming and numeric computing environment. The data was fitted to a smoothing spline to allow resampling of the strain-stress data. The resampling spacing length is 1000. A Savitzky-Golay technique is applied for smoothing and differentiating the data by least-square regression analysis. The Savitzky-Golay uses a 2^{nd} order polynomial and ~61 sample frames. This enables the identification of the linear limit by pinpointing inflexion points given by estimates of the first and second derivatives. Using the derivatives estimates, the first point is detected where the second derivative is close to zero. From that point, a window of 500 points is created where other instances where the second derivative is close to zero are found. The linear Young's modulus E = σ/ε is calculated from the mean of all those instances and with a tolerance variation of 0.003. Goodness of fit is deemed adequate for R² above 0.99. When lower goodness of fit is observed, R² < 0.99, due to the non-linearity of uneven specimen surfaces, the non-linear part is gradually excluded until the goodness of fit improves to R² ≥ 0.99.

### Linear elastic compression modulus (Young's modulus) - used in Example 3

Measurements are conducted with a rotational rheometer (MCR 302, Anton Paar, Austria) equipped with parallel plate geometries (Diameter: 25 mm). Samples were shaped with a cylindrical metallic rod 25 mm and loaded onto the rheometer. A constant gap of 1 mm was fixed and excess sample was trimmed with a spatula. A strain sweep with amplitude = 0.001-100% was conducted at frequency = 2 rad/s, from which the linear shear modulus was obtained at strain = 0.01 %. The linear oscillatory shear modulus G was converted to the linear compression Young's modulus E using the relationship G = E/(2*(1+v)), where v is the Poisson ratio of the material which is approximately 0.5 for soft solids (Pritchard et al., 2013, Soft Matter, 9(26), 6037-6045).

### Composition Homogeneity Parameter (CHP)

The CHP provides a measure for the extent to which the CMFs have been homogenously dispersed in the composition. The CHP is measured with a method based on confocal scanning laser microscopy (CSLM) and performed on a standardised sample comprising the CMFs. The protocol to establish the CHP includes three parts: (A) standardised sample preparation, (B) CSLM microscopy to obtain micrographs of the standardised sample, and (C) digital image analysis to calculate the CHP value.

### (A) Standardised sample preparation

Lipid food compositions were brought to room temperature (20°C) by holding for 1 hour. Subsequently, a sample from the composition is diluted with water to obtain a 200 g dispersion with 0.10 wt.% cellulose by weight of the dispersion, in a 500 ml plastic beaker with an inner diameter of 80 mm. Samples were then mixed in overhead stirred (with impeller geometry) at 2000rpm for 5 min and filtered with a 125 µm sieve. Then, the mixture was stirred using a Silverson L5M-A overhead mixer (small screen, 1 mm holes) at 5000 rpm for 5 minutes. This mixing step ensures the cellulose microfibrils are evenly distributed over the diluted sample volume.

Optionally potential large protein particles are further removed by additional centrifugation and/or protein hydrolysis steps. The centrifugation step consists in placing 20 mL of slurry into 50 mL centrifugation tubes, and subjected to 250rpm for 3 min. The supernatant is then collected from the middle of the tube. The protein hydrolysis steps include preparing a solution of 9 mg of pepsin from porcine gastric mucosa (Sigma Aldrich) per 1 mL 0.01 M HCl is prepared. Then, 1 mL of the pepsin in HCl solution is added to 17 mL of microfibril dispersion to reach a final cellulose microfibril concentration of 0.10 wt.%. The pH is then adjusted to 1.8-2 by dropwise addition of 1 M HCl, and the dispersion is shaken gently and allowed to hydrolyse for 2h in a water bath at 37 °C.

Then, 3 mL of the mixed sample was transferred to a glass vial with a plastic Pasteur pipette, to which 25 µL of 0.5 % w/v Congo Red aqueous solution was added to dye the standardised sample. To ensure even dye distribution throughout the sample, it may, for instance, be gently shaken. Then, 700 µmL of the sample is pipetted with a 1 mL tip onto a glass coverslip (High precision No. 1.5H, 2.4 cm width, 5 cm length, 170 ± 5 µm thickness) to which a cover well imaging chamber (2 cm diameter X 0.17 cm thickness) has been glued previously.

### (B) CSLM microscopy to obtain micrographs of the standardised sample

The dyed standardised samples were imaged with a Zeiss LSM 880 confocal scanning laser microscope equipped with a diode-pumped solid-state laser line emitting at a wavelength of 561 nm and operated at excitation wavelengths: 570-687 nm, fixed laser power, using a 10x objective with a numerical aperture of 0.45 and working distance 5.2 mm, and thereby recording at least 25 independent micrographs at a resolution of 1024×1024 pixels where each pixel represents a sample size of within the range of 1490 by 1490 nm to 1540 by 1540 nm, taking each image at a depth penetration between 50-70 µm, adjusting the laser intensity and gain settings such that in every image between 0.1 and 2% of the pixels are saturated and recording the micrographs at a colour depth of at least 8 bits per pixel. Comparisons of CHP values across samples were made in images having similar % of saturated pixels (0.5 - 2%) and undersaturated pixels (> 0.01%).

Micrographs should be recorded whilst avoiding imaging air bubbles, sample edges or areas where the source of cellulose microfibrils is locally concentrated. Likewise, care should be taken to avoid imaging other objects of macroscopic dimensions that do not originate from the cellulose microfibrils. This may be conveniently accomplished, for instance, by removing such objects of macroscopic dimensions during sample preparation by sieving, centrifuging or by protein hydrolysis.

Typically, one or more photomultiplier tubes are used as the light detectors in the microscope. Preferably the microscope is equipped with three photomultiplier tubes (PMTs). Independent micrographs are micrographs that are non-overlapping, both in the x-y plane and in the z-direction. The micrographs may suitably be recorded at a colour depth higher than 12 bits (for instance at 24-bit RGB), since this can easily be converted to a lower colour depth by well-known means (e.g. using well-known image analysis software including for instance imaged.).

### (C) Digital image analysis

The digital image analysis part of the protocol involves the following steps:
a. Ensuring that the micrographs are present as or converted to a format with a single intensity value for each pixel;
b. Normalising each individual micrograph by recalculating the pixel values of the image so that the range of pixel values used in the image is equal to the maximum range for the given colour depth, thereby requiring 0.4% of the pixels to become saturated;
c. Obtaining for each individual micrograph the image histogram and, if necessary, removing discrete, single point spikes from each histogram by visual inspection and exclude them from the analysis (e.g. using MATLAB);
d. For each individual image histogram determining the full width at half maximum (FWHM), by first determining the maximum count in the histogram and the channel containing this maximum count (the maximum channel), then counting the number N of channels between the first channel containing a value equal or higher than half the maximum and the last channel containing a value equal or higher than half the maximum thereby including this first and last channel in the count N, and then calculating the FWHM by dividing the count N by the total number of channels;
e. Calculating the composition homogeneity parameter CHP, wherein CHP is the average of the FWHM values obtained for the individual micrographs.

The digital image analysis steps may suitably be carried out using well-known image analysis software including for instance imaged. The result of step (a) should be that the image is of a format wherein the intensity for each pixel is expressed as a single value. This is for instance the case if the image is a "grey scale" image. In contrast, images in RGB format or a related format having three intensity values per pixel should be converted. This is easily achieved by well-known operations in the field of digital image analysis. An example of a suitable output format would be a grey-scale image with 8 bits per pixel.

The normalising operation of step (b) is generally known as a histogram stretch operation or a contrast stretch operation. The normalisation is performed by allowing a small percentage of pixels in the image to become saturated. Here saturation includes both the minimum and maximum value for the given colour depth. In an 8-bit greyscale image, the minimum value would be 0 and typically displayed as black, whilst the maximum value would be 255 and typically displayed as white.

The image histogram of step c. is a well-known property for digital images, representing the distribution of the pixels over the possible intensities, by providing the pixel count for each intensity channel. For the purpose of the spike-removal of step c., the value for a particular channel is considered a spike if it is considerably higher than the values of the adjacent channels, typically at least a factor of 1.5 higher.

The lower half-maximum channel in step (d) corresponds to the channel containing a count of half the maximum count that is furthest away from the maximum channel on the low-intensity side of the maximum channel. Analogously, the upper half-maximum channel corresponds to the channel containing a count of half the maximum count that is furthest away from the maximum channel on the high-intensity side of the maximum channel. The FWHM that is obtained in step (d) will be a value between 0 and 1.

### Example 1

Lipid food compositions 1 and A-C were prepared based on the ingredients shown in Table 1.

**Table 1**

| **Ingredient (wt.% of final product)** | **1** | **2** | **A** |
|---|---|---|---|
| Fully refined shea butter (ex AAK) | 38.25 | - | 38.25 |
| Soybean oil (ex Van der Steen B.V.) | 38.25 | 20 | 38.25 |
| Citrus fibre (Herbacel AQ+ ex Herbafood) | 0.5 | 1.6 | 0.5 |
| Soy protein isolate ¹ (Supro EX37 ex Solae) | 2.0 | - | 2.0 |
| Potato protein ¹ (Solanic 300; Avebe, NL) | - | 9.6 | - |
| Water | 21 | 68.8 | 21 |

| | | | |
|---|---|---|---|
| ¹ Thermally gelling protein | | | |

### Preparation of aqueous dispersion

The aqueous dispersions of composition 1, 2 were prepared by mixing citrus fibre with water, followed by dispersion using an L5M-A (Silverson) overhead mixer for 15 minutes at 3000 rpm. Subsequently, protein was added, followed by dispersion using an L5M-A (Silverson) overhead mixer for 30 minutes at 5500 rpm. The resulting mixture was further homogenised by microfluidization at 1500 bar (Microfluidizer 110S, 50 µm Z chamber).

The aqueous dispersion of composition A was prepared by adding a mixture of soy protein isolate and citrus fibre to water in a Kenwood mixer, and said mixture was stirred for 5 minutes at minimal speed.

### Preparation of the lipid food composition

Compositions 1 and A were prepared by adding the shea butter to the soybean oil and heating the mixture to 80°C till complete dissolution of the solid fat fraction (i.e. formation of a liquid oil phase). Then, the liquid oil phase was added at 35°C to the aqueous dispersion described herein above and the resulting mixture was further homogenised using an L5M-A (Silverson) overhead mixer for 30 minutes at 4000 rpm at a controlled temperature of 35-40 °C. The resulting mixture was vacuum dried at 50 °C for about 5 hours in an oven (VacuTherm, Thermo Scientific, 10 mbar). The resulting dried mixture was transferred to metal containers and heated to 80 °C for 30 minutes. The obtained lipid shaped food composition was then cooled and stored at 5 °C for 8 hours. The weight of the mixture before drying and after the heating step was measured to determine the final dry content of the obtained lipid food composition.

Composition 2 was prepared similarly, except the mixture was not vacuum dried before heating to 80 °C and subsequent cooling to 5 °C.

Each composition's elastic compression modulus, Composition Homogeneity Parameter (CHP) and frying performance was determined after its preparation. The results are presented in Table 2.

**Table 2**

| | **1** | **2** | **A** |
|---|---|---|---|
| CHP | 0.160 ± 0.0139 | 0.115 ± 0.006 | 0.054 ± 0.011 |
| Elastic modulus (kPa) | 85.19 ± 9.24 | 86.05 ± 4.24 | N.D. |
| Ability to form fat shape holding tissue mimetic | + | + | - |
| Acceptable oil loss upon heating | + | + | - |
| Acceptable frying performance | + | + | - |

| | | | |
|---|---|---|---|
| N.D.: Not detectable; too soft "-" = Unsatisfactory "+" = Satisfactory | | | |

The higher CHP has a beneficial impact on the elastic compression modulus of the lipid compositions and on the frying performance on said lipid compositions. Composition A collapsed entirely upon heating, releasing too large amounts of water and oil. The total amount of liquid loss during upon dry heating to 180 °C for 5 minutes was determined. The results are shown in Table 3.

**Table 3**

| | **Water loss (wt.%)** | **Oil loss (wt.%)** | **Total loss (wt.%)** |
|---|---|---|---|
| 1 | 9.40 ± 1.24 | 24.25 ± 7.05 | 33.65 ± 5.57 |
| 2 | 51.30 ± 2.39 | 0 | 51.30 ± 2.39 |
| A | 42.21 ± 1.99 | 39.49 ± 5.39 | 81.70 ± 5.48 |

### Example 2

Shaped lipid food composition 3 was prepared based on the ingredients shown in Table 4.

**Table 4**

| **Ingredient (wt.% of final product)** | **3** |
|---|---|
| Palm fat (ex Sime Darby) | 36.75 |
| Soybean oil (ex Van Der Steen B.V.) | 50.75 |
| Citrus fibre (Herbacel AQ+ ex Herbafood) | 0.5 |
| Soy protein isolate ¹ (Supro EX37 ex Solae) | 2.0 |
| Tween 20 (ex Sigma-Aldrich) | 0.3 |
| Water | 9.7 |

| | |
|---|---|
| ¹ Thermally gelling protein | |

Composition 3 was prepared by mixing citrus fibre with water, followed by dispersion using an L5M-A (Silverson) overhead mixer for 15 minutes at 3000 rpm. Subsequently, soy protein isolate was added, followed by dispersion using an L5M-A (Silverson) overhead mixer for 30 minutes at 5500 rpm. The resulting mixture was further homogenised by microfluidization at 1500 bar (Microfluidizer 110S, 50 µm Z chamber). The lipid phase was prepared by adding the palm fat to the soybean oil and heating the mixture to 80°C till complete dissolution of the solid fat fraction (i.e. formation of a liquid oil phase). Then, the liquid oil phase was added at 50°C to the dispersion with cellulose microfibrils. Tween 20 was added, and the resulting mixture was further homogenised using an L5M-A (Silverson) overhead mixer for 30 minutes at 5000 rpm at a controlled temperature between 52-58 °C. The resulting mixture was vacuum dried (VacuTherm, Thermo Scientific, 10 mbar) at 50 °C for 4.5 - 5 hours and then stored for 8 hours at 5 °C. The weight of the mixture before and after vacuum drying was measured to determine the final dry content of the obtained shaped lipid food composition.

The frying performance of shaped lipid compositions 3 was compared to real animal fat tissue (Albert Heijn "Gerookt Vetspek Stukje", lardon containing 83 wt.% animal fat). The shaped lipid food composition 3 showed similar frying performance to real animal fat tissue, releasing fat upon heating and forming a brown, crispy layer.

### Example 3

Shaped lipid compositions 4-7 were prepared based on the ingredients shown in Table 5.

**Table 5**

| **Ingredient (wt.% of final product)** | **4** | **5** | **6** | **7** |
|---|---|---|---|---|
| Tripalmitin (ex Sigma-Aldrich) | 3.65 | 7.3 | 14.6 | 21.9 |
| Soybean oil (ex Van Der Steen B.V.) | 69.35 | 65.7 | 58.4 | 51.1 |
| Citrus fibre (Herbacel AQ+ ex Herbafood) | 0.5 | 0.5 | 0.5 | 0.5 |
| Tween 20 (ex Sigma-Aldrich) | 0.2 | 0.2 | 0.2 | 0.2 |
| Water | 26.3 | 26.3 | 26.3 | 26.3 |

The citrus fibre was mixed with water, followed by dispersion using an L5M-A (Silverson) overhead mixer for 15 minutes at 3000 rpm. The resulting suspension was homogenised by microfluidisation (Microfluidizer 110S, 1500 bar, 50 µm Z chamber) to obtain an aqueous dispersion. A fat blend was prepared by adding tripalmitin to the soybean oil and by heating to 80 °C until the solid fat fraction was completely dissolved, creating a liquid oil phase. The obtained liquid oil phase and Tween 20 were added at 35 °C to the aqueous dispersion. The resulting mixture was further homogenised using an L5M-A (Silverson) overhead mixer for 30 minutes at 5000 rpm at 55-65 °C. The resulting mixture was held at -20 °C for 1h, placed into containers, freeze-dried at 14.1 mBar (Sublimator 3x4x5-10, Zirbus Technology) at -20 °C for 24 h, and then stored for 8 hours at 5 °C for 8h. The weight of the mixture before and after freeze drying was measured to determine the final dry content of the obtained shaped lipid food composition.

Each composition's elastic modulus was determined after its preparation and compared to real pork fat tissue (Albert Heijn "Gerookt Vetspek Stukje", lardon containing 83 wt.% animal fat). The mechanical properties were determined at 20 °C and the results are presented in Table 6.

**Table 6**

| | **4** | **5** | **6** | **7** | **Reference** |
|---|---|---|---|---|---|
| Elastic modulus (kPa) | 277.12 ± 110.03 | 641.21 ± 135.10 | 960.88 ± 101.43 | 2016.04 ± 278.92 | 498.33 ± 192.12 |

The resulting lipid compositions each showed a white, non-translucent appearance, similar to real animal fat tissue. The shaped lipid compositions possessed similar mechanical properties to real fat tissue. The elastic modulus can be adjusted by increasing or decreasing the amount of solid fat (tripalmitin) in the triglyceride fraction.

All used ingredients in the above examples are produced in Europe.

## Claims

1. A shaped lipid food composition with an elastic compression modulus larger than 9 kPa and comprising by weight of the lipid food composition:
a. 15-99 wt.% of non-animal triglycerides;
b. 0.1-6 wt.% of cellulose microfibrils;
c. 0-15 wt.% of thermally gelling non-animal protein;
d. 0-5 wt.% of non-protein emulsifier; and
e. 0.1-75 wt.% water;
wherein the lipid food composition comprises at least one of component (c), (d) or both; and wherein the lipid food composition has a composition homogeneity parameter (CHP) of at least 0.06.

2. The lipid food composition according to any one of the preceding claims, wherein the weight ratio non-animal triglycerides to water is at least 1:4.

3. The lipid food composition according to any one of the preceding claims, wherein the lipid food composition comprises 0.1-12 wt.% thermally gelling non-animal protein.

4. The lipid food composition according to any one of the preceding claims, wherein the lipid food composition comprises 0.05-4 wt.% of non-protein emulsifier.

5. The lipid food composition according to any one of the preceding claims, wherein the lipid food composition comprises by weight of the lipid food composition:
a. 15-99 wt.% of non-animal triglycerides having a N₂₀-value <10%;
b. 0.1-6 wt.% of cellulose microfibrils;
c. 5-15 wt.% of thermally gelling non-animal protein;
d. 0-5 wt.% of non-protein emulsifier;
e. 0.1-75 wt.% water.

6. The lipid food composition according to any one of the preceding claims 1-4, wherein the lipid food composition comprises by weight of the lipid food composition:
a. 15-99 wt.% of non-animal triglycerides having a N₂₀-value ≥10%;
b. 0.1-6 wt.% of cellulose microfibrils;
c. 0-15 wt.% of thermally gelling non-animal protein;
d. 0.1-5 wt.% of non-protein emulsifier;
e. 0.1-75 wt.% water.

7. The lipid food composition according to any one of the preceding claims, wherein the lipid food composition is a fat tissue analogue.

8. A method for preparing the shaped lipid food composition according to any one of the preceding claims, comprising the steps of:
a. producing an aqueous dispersion comprising cellulose microfibrils by treating an aqueous dispersion comprising a source of cellulose microfibrils with high shear;
b. producing an emulsion by combining the aqueous dispersion comprising microfibrils with non-animal triglycerides and at least one of (i) thermally-gelling non-animal protein and (ii) non-protein emulsifier; and
c. cooling the emulsion to produce the shaped lipid food composition.

9. The method according to claim 8, wherein the produced emulsion in step b. comprises thermally-gelling non-animal protein and non-animal triglycerides having a N₂₀-value below 10%, and the produced emulsion in step b. is heated before step c. to gel said thermally-gelling non-animal protein at least partially.

10. The method according to claim 8, wherein the produced emulsion in step b. comprises non-protein emulsifier and non-animal triglycerides having a N₂₀-value of at least 10%, and the non-animal triglycerides are heated to a temperature above the melting point of the non-animal triglycerides before and during step b.

11. The method according to any one of claims 8-10, wherein the emulsion is dried before step c. to produce an emulsion with a water content of at most 15 wt.% by weight of the emulsion.

12. The method according to any one of claim 8-11, wherein the high shear treatment of step a. includes one or more steps of high-pressure homogenisation at a pressure between 200-4000 bar.

13. A food product comprising 1-80 wt.% of the shaped lipid food composition according to any one of claims 1-7.

14. The food product according to claim 13, wherein the food product is selected from the group of meat analogues, soups, pasta, noodles, spreads, meal makers, souses, dressings, savoury concentrates, snacks, beverages, and frozen desserts.

15. The food product according to claim 13 or 14, wherein the food product is a meat analogue further comprising by weight of the meat analogue one or more of:
- 0-75 wt.% of hydrated texturized non-animal protein pieces; and
- 0-70 wt.% of a binder.
